(19) Europäisches Patentamt
European Patent Office
Office européen des brevets

(11) **EP 3 842 796 A1**

(12) # EUROPEAN PATENT APPLICATION

(43) Date of publication:
**30.06.2021 Bulletin 2021/26**

(21) Application number: **20214490.3**

(22) Date of filing: **16.12.2020**

(51) Int Cl.:
***G01N 27/82*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **27.12.2019 RU 2019144464**

(71) Applicant: **Society with the limited responsibility scientific-technical Center "Transkor-K" Moscow 111141 (RU)**

(72) Inventors:
• **KAMAEVA, Svetlana Sergeevna 111141 Moscow (RU)**

• **GOROSHEVSKII, Valerian Pavlovich 111141 Moscow (RU)**
• **KOLESNIKOV, Igor Sergeevich 111141 Moscow (RU)**
• **BELOTELOV, Vadim Nikolaevich 111141 Moscow (RU)**
• **YUSIPOV, Ruslan Haidarovich 111141 Moscow (RU)**
• **IVLEV, Leonid Efimovich 111141 Moscow (RU)**

(74) Representative: **Kailuweit & Uhlemann Patentanwälte Partnerschaft mbB Bamberger Straße 49 01187 Dresden (DE)**

(54) **A PROCESS OF CONTACTLESS DETECTION OF PRESENCE, LOCATION, AND DANGER DEGREE OF STRESS CONCENTRATORS OF MECHANICAL STRESS IN METAL OF FERROMAGNETIC CONSTRUCTIONS**

(57)     The invention relates to a process of contactless detection, positioning and ranking of mechanical stress concentrators in a metal of ferromagnetic constructions and an apparatus therefor. A device for controlling magnetic field intensity is positioned with possibility to move along the construction axis; said device being capable of measuring the magnetic field intensity; containing at least two blocks of sensors that register magnetic field intensity; where the sensors in each block are positioned on disks at a fixed distance from one another and are capable of measuring magnetic field components around the pipeline, each disk being capable rotating around its axis in horizontal plane. Two independent means of measurement measure the distance travelled by the device during measurement and an external source generates an electromagnetic field of a set frequency. The sensor blocks and the measurement means are connected to an unit of data gathering and initial processing, analyzing the stored data in order to determine anomalies of magnetic field revealed by the sensors; said anomalies indicating the presence and location of risk spots of breaking and destruction of ferromagnetic constructions

Fig. 1

**Description**

The invention is concerned with the area of means and methods of instrumental control, preferably involving registration of magnetic anomalies, and it can be used in controlling assets of pipeline transportation system, oil and gas industry, railway transportation system, utility systems, inspection of metal constructions, environment protection programs, and other industries that involve use of pipelines (construction, energy, nuclear, etc.)

It is known (RU 2102652, issued 20.01.1998) a contact process of detection of local defects of pipelines by means of registering anomalies of magnetic field intensity of a pre-magnetized pipeline involving special devices - intelligent inline pigs. The process includes furnishing the pipeline with launch and trap cameras for pipeline cleaning devices and for intelligent pigs; washing out the pipeline; cleaning the interior surface; providing the full-size clear way for the intelligent pig to pass; launching, and moving the intelligent pig and simultaneously magnetizing the pipeline walls; registering magnetic field anomalies by measuring stray magnetic field and saturated magnetic field; recording the gathered information into the internal memory; decoding the gathered information in order to determine the locations and types of detected defects.

The known process allows determining locations, parameters and presumable cause of all local defects of a pipeline.

The capabilities of inline intelligent pigs allow detection of the following defect types: 1 - anomalies of geometry - dents, buckles, ovalities of the cross-section; 2 - metal loss of mechanical, corrosion of technical cause, and also lamination defects and inclusions; 3 - detection of longitudinal-oriented cracks, stress-corrosion cracking and crack-like defects (lack of weld penetration, incomplete fusion, sullage inclusions), including defects of weld joints.

The drawbacks of using inline intelligent pigs are known to be high cost of application, considerable labor effort, limitations in mass application (because not all of the pipelines are prepared for the inline inspection: they require launch and trap cameras, many pipelines may not have the passable section due to weld burr or due to clogging that is impossible to clean out; pipeline geometry may change sharply due to change of burial depth, steep rises and drops of the pipeline). For the process to be applied, a vast amount of preliminary work has to be done, in particular, for magnetic intelligent pigs the pipeline must be pre-magnetized to a considerably high level of residual magnetization (comparable to saturation field). This introduces additional problems of de-magnetization of the pipeline after running the intelligent pig before undertaking any repairs.

There is also known a process (RU 2155943, issued 10.09.2000) of determining a stress-deformed state of an item made of ferromagnetic metal. In the described process, the normal component of magnetic field intensity $H_p$ is measured on the item's surface in multiple points of its surface; the gradient of magnetic field intensity $H_p$ is determined between ends of a line segment of a fixed-length $l_b$; then the value of $H_p$ is measured simultaneously at both ends of another line segment of length $l_b$ that is coplanar to the first segment and is located a distance $l_k$ away from it; the normal component of $H_p$ is consequently measured in pairs of points that are distanced $l_k$ away from each of the previous segment of measurements maintaining the coplanarity; if different signs of the value $H_p$ are detected, gradients $|H_p|/l_b$ and $ΔH_p/l_k$ of the values of normal component of magnetic field intensity at fixed-length segments $l_b$ and $l_k$ are calculated; the said gradients are compared, and based on the maximal value of one of the said gradients, the area of maximal deformation is determined.

In order to realize the said process, it is required to measure the normal component, that requires access to the surface being inspected, in particular, for pipelines, is assumed that the pipeline has to be exposed (excavated).

It is also known (RU 2661312, issued 13.07.2018) a process of contactless non-destructive testing of items that involves pre-magnetization the item being tested by means of a magnetization device; the parameters of magnetic field are measured in between the poles of the magnetic conductor at the surface of the item being tested; and based on the results of measurements, the presence of defects is concluded; in the said process, the magnetizing device is implemented as a two-wheel carriage; the wheels of the carriage are used as the poles of the magnetizing device; the magnetic field generated by the magnetizing devices additionally used to implement contactless induction and reception of ultrasonic oscillations in an electromagnetic-acoustic method; the inducer for the said method is located within the spot of the contact of the carriage wheel with the item being tested; and conclusions about presence and type of defects are done based on the combined analysis of ultrasonic and magnetic methods of non-destructive testing.

The drawback of the said process is its limited area of usability, and also the complexity of the technology due to simultaneous usage of two methods of testing - ultrasonic and magnetic.

The closest analog for the suggested invention appears to be the process (RU 2264617, issued 20.11.2005) of contactless detection of presence and location of defects of metal pipelines that involves measuring magnetic field induction above the inspected pipeline, that is implemented as follows: during inspection, in a motion process, in a set of points the vector components of magnetic field are measured in Cartesian coordinates by means of at least two tri-axial sensors; a tensor of magnetic field gradients is constructed; by means of matrix transform, the gathered data is analyzed; based on the results of analysis, the background value is determined and the deviations from that value; from their difference from the background value by a set criterial value, the conclusion is made regarding the presence and location of the defects of metal pipeline; and a magnetic plot is created with positioning of the defects..

As the drawback of the said inspection process it should be admitted that it is not informative enough.

The technical problem that is being solved by implementing the suggested process is further development of testing methods of ferromagnetic constructions.

The technical result achieved by implementing the suggested process is increasing the probability of detection of metal defects and their identification by gathering more statistical data per unit of length of the inspected ferromagnetic construction.

The technical problem is solved by a process according to claim 1 and a device according to claim 7, preferred embodiments are subject of the subclaims.

To achieve the said technical result it is proposed to utilize the suggested process of contactless detection of location and danger degree of stress concentrators of mechanical stress in metal of ferromagnetic constructions. According to the suggested process of contactless detection of location and danger degree of stress concentrators of mechanical stress in metal of ferromagnetic constructions, a device is positioned with possibility to move along the construction axis; the said device being capable of measuring the magnetic field intensity; containing at least two blocks of sensors that register magnetic field intensity; where the sensors in each block are positioned on disks at a fixed distance from one another; where the said disks are capable of rotating around its axis in horizontal plane, and the number of said disks must be at least two, the velocity of rotation of the disks must be synchronized and must provide not less than one hundred measurements of magnetic field intensity in at least one fixed point within a time unit; each sensor must be made possible of measuring magnetic field components around the pipeline in at least two orthogonal directions; and the said sensors at the instant of measurement of magnetic field intensity form a spatial structure; one of the sensor blocks contain at least one additional sensor that allows to measure the vector of the Earth's magnetic field; during registration of magnetic field intensity additionally at least two independent means are used to measure the distance travelled by the device during the process of the measurement; the sensor blocks are connected to the unit of gathering and initial processing of the data; to the said unit also the means of measurement of the travelled distance are connected; during the process of measuring the magnetic field intensity, an external source generates the electromagnetic field of a certain frequency, where the said frequency is selected depending on the type and size of the inspected construction; the data stored in the unit of gathering and initial processing is analyzed in order to determine anomalies of magnetic field revealed by the sensors; the said anomalies indicate the presence and location of spots of increased risk of breaking and destruction of ferromagnetic constructions in the vicinity of the most dangerous mechanical stress concentrators.

For the purpose of the suggested process description, a stress concentrator is assumed to be a metal defect or an area of an increased mechanical load. It may be differentiated by its danger degree.

Realization of the suggested process involves mainly inspection of ferromagnetic constructions like pipelines, rails, beam and girder elements of bridges and towers.

An embodiment is possible where, depending on the structure and size of the inspected object, the distance between the sensor blocks may be adjustable.

The travelled distance is preferably measured by means of a mechanical odometer and with a GPS sensor. Other means of measuring are also possible.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination.

Process embodiment example.

In order to apply the process in a technically difficult environment- "pipe inside a pipe" (metal sleeve), the following operations were undertaken:

1. Measure the magnetic intensity of the constant magnetic field while moving the measuring system with tri-axial sensors along the axis of the pipeline that is buried in the soil. The pipeline remained inside the sleeve.

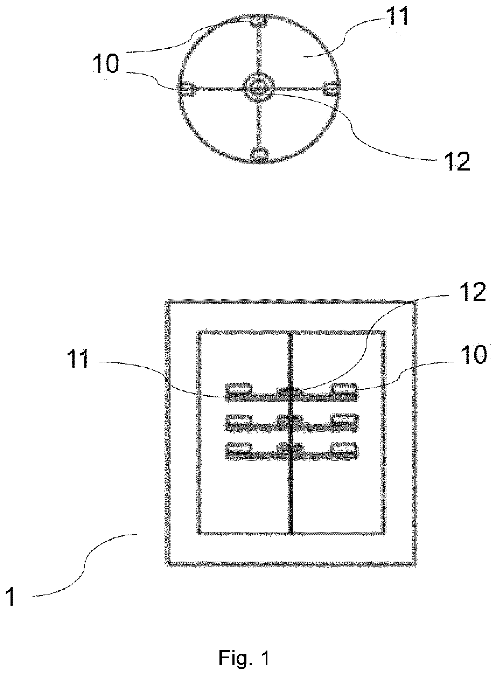

The measurement of constant magnetic field intensity was done by means of flux gate sensors of constant magnetic field; the sensors were located on rotating disks in blocks, in the manner shown on figure 1.

Flux gate sensors (10) of constant magnetic field (figure 1) were installed on disks (11) made of magnetic-neutral material, where at least two tri-axial flux gate sensors in blocks are located in the same plane, and one sensor - in a different plane. Such measurement layout provided good quality data for further processing and efficient control of functioning of data gathering unit.

2. Measure the magnetic field intensity of the intrinsic magnetic field of the pipeline at intervals not more than 0.25m over 100 meters of the pipeline.

3. For the next stage, at the beginning of the 100-meters section of the pipeline, install an alternate electro-magnetic field generator.

4. Using the generator, induce an alternate magnetic field in the pipeline metal and measure the intensity of magnetic field over the same section of the pipeline while the generator was active. The magnetic field intensity is measured using the block of sensors of alternate magnetic field.

5. In order to position the anomalies to particular points on the wall of the pipeline that is the object of inspection inside the sleeve, as well as to evaluate its danger degree with respect to factors that may provide magnetic disturbance, compare the values of intrinsic magnetic field of the pipeline to the values after inducing the alternate magnetic field; conduct statistical processing of the values of same-axis components of the constant and the alternate magnetic fields in each point of measurement, that allowed to sort out the anomalies belonging to the pipeline being inspected and not to the external sleeve, and each anomaly was assigned exact location and danger degree. From openly published sources (Vonsovsky S.V. Magnetism. Magnetic properties of dia-, para-, antiferro-, and ferromagnetics. Moscow, Nauka, 1971, 1032 p.):

Magnetic induction $B = \mu^* \mu_0^* H$, where $\mu_0 = 4\pi^* 10\text{-}7$ $V^* s^* A^{\text{-}1*} m^{\text{-}1}$- magnetic constant, $\mu$ - magnetic permeability of metal.

Such sensitivity is achieved by modern flux gate or supersensitive SQUID-sensors that were used for the measurements.

When an alternate electro-magnetic field of a particular frequency is induced on the pipeline, the areas containing local stress concentrators received resonance magnetization. This effect was used in order to increase the information capacity of the intrinsic magnetic field and to improve the process of determining the technical state of the pipeline.

6. Calculation of positions and magnetic moments of the anomaly sources was done involving analytical expressions for magnetic induction of horizontal and vertical magnetic dipoles (i.e. in any measurement of a magnetic field in areas close to the pipe metal as well as in areas away from the pipe metal, the value of magnetic field $B_{total}$ is generally a vector sum of the following values:

$$B_{total} = B_{Earth} + \Delta B_{pl} + \Delta B_{sc} + \Delta B_{noise}; \quad (1),$$

with

- $B_{Earth}$ - the vector of the magnetic field of the Earth, that is specific for each geographic spot and changes with time;

$$B_{Earth} = F \, (\text{Altidude, Longitude, Time})$$

- $\Delta B_{pl}$ - the vector of magnetic field of the pipeline; it depends on pipeline orientation relative to north-south line, mechanical and chemical composition of the pipe, diameter, wall thickness, presence of cathodic protection current. In other words, this parameter may be characterized as the background value of magnetic field vector of the pipeline at a limited straight-line section.

- $AB_{sc}$ - the vector of magnetic field induced by the stress concentrator. It may be any variation of the mean value $B_{pl}$. The main purpose of the contactless magnetometric process is to determine this parameter.

- $\Delta B_{noise}$ - the vector of magnetic field induced by the environment (and thus uncontrollable), which may lead to errors in signal readings. For example, it was experimentally determined that a high voltage line of 110 kV may introduce an error into the value of $B_{total}$ as large as 5 times the value of $B_{Earth}$.

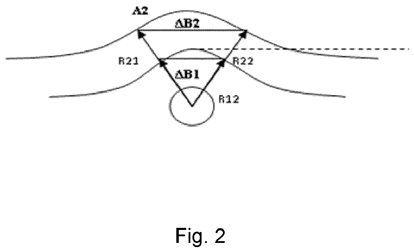

The problem of stabilization was solved by introducing several converters, and the measured parameter was the difference between the two successive measurements. That is, instead of measuring absolute values of the magnetic field intensity, it is necessary to measure the gradient between the reference converter and the measurement one, and to analyze the difference between these two converters with regard to distance from the object of inspection. The magnetic field gradient determines 90% of purity of referencing to the Earth magnetic field. Evaluating the difference between the reference converter and the measurement converter helps track the parameter $H_{pl}$ and extract the useful signal (figure 2).

R11 - radius-vector from the pipeline centerline to converter No.1 in its remote location

R12 - radius-vector from the pipeline centerline to converter No.1 in its close location

R21 - radius-vector from the centerline of the pipeline to converter No. 2 in its remote location

R22 - radius-vector from the centerline of the pipeline to converter No. 2 in its close location

$\Delta B2$ - the gradient between the two converters in their remote-from-pipeline location

$\Delta B1$ - the gradient between the two converters in their close-to-pipeline location

A2 - the aperture between the two converters in their remote-from-pipeline location

In order to isolate in $B_{total}$ the magnetic field $B_{pl}$ of the pipeline itself, and not of the metal sleeve, and also the magnetic field of the stress concentrators $B_{sc}$, it is required to measure gradients not only in the direction of the pipeline axis, but also in the orthogonal direction, involving the technology of rotating the sensor-holding disks. This made possible to evaluate the distribution of the magnetic field intensity concentrators (the anomalies) and to calculate the background components of pipeline magnetic field $B_{pl}$ with respect to $B_{Earth}$.

**reference signs**

| | |
|---|---|
| 1 | device for controlling magnetic field intensity |
| 10 | sensors for measuring magnetic field parameters generated by the ferromagnetic construction |
| 11 | disk |
| 12 | data gathering and initial processing unit |
| R11 | radius-vector from the pipeline centerline to converter No.1 in its remote location |
| R12 | radius-vector from the pipeline centerline to converter No.1 in its close location |
| R21 | radius-vector from the centerline of the pipeline to converter No. 2 in its remote location |
| R22 | radius-vector from the centerline of the pipeline to converter No. 2 in its close location |
| ΔB2 | the gradient between the two converters in their remote-from-pipeline location |
| ΔB1 | the gradient between the two converters in their close-to-pipeline location |
| A2 | the aperture between the two converters in their remote-from-pipeline location |

**Claims**

1. A process of contactless detection, positioning and ranking of mechanical stress concentrators in a metal of ferromagnetic constructions, comprising the steps

    i) placing a device for controlling magnetic field intensity (1), said device (1) being capable of moving along the construction's axis, the said device (1) having at least two blocks of sensors, the said sensors (10) in a block are located on a disk (11) at a set distance from one another, where the said disk (11) is capable of rotating around its axis in horizontal plane, and the number of such disks (11) in a block is not less than two, where the speed of rotation of the disks (11) is synchronized and provides not less than one hundred measurements of magnetic field intensity per time unit, and where each sensor (10) is capable of measuring the magnetic field parameters generated by the ferromagnetic construction in at least two orthogonal directions, and where the said sensors (10) at the time instant of measuring the magnetic field form a spatial structure, and where at least one of the sensor blocks contains at least one extra sensor capable of measuring the Earth magnetic field vector, and where the sensor blocks are connected to a unit of data gathering and initial processing (12), and

    ii) registering the magnetic field and additionally measuring the distance travelled by the device (1) during the time of registering by at least two independent means of measuring the travelled distance, connected to the unit of data gathering and initial processing (12), and transmitting the data of the registered magnetic field and the measures distances to the unit of data gathering and initial processing (12), and

    iii) generating an electromagnetic field of a set frequency by an external source while registering the magnetic field, said frequency being selected depending on the type and size of the inspected construction, and

    iv) analysing the information stored in the unit of data gathering and initial processing (12) in order to determine the magnetic field anomalies detected by the said sensors (10), where the anomalies are used to indicate the presence and location of points of risk of destruction of the ferromagnetic construction being inspected in the vicinity of the most dangerous mechanical stress concentrators.

2. A process according to claim 1, wherein a mechanical stress concentrator is a metal defect or an area of increased load.

3. A process according to claim 1 or 2, wherein a mechanical stress concentrator is being ranked by its danger degree.

4. A process according to one of the claims 1 to 3, wherein the ferromagnetic construction being inspected is a pipeline, rail or railway, a bridge or tower girder or beam.

5. A process according to one of the claims 1 to 4, wherein, depending on the structure and the size of the construction, the distance between the sensor blocks is adjustable.

6. A process according to one of the claims 1 to 5, wherein the travelled distance is measured by means of a mechanical odometer and a GPS measurement unit

7. A device for contactless detection, positioning and ranking of mechanical stress concentrators in a metal of ferromagnetic constructions, comprising at least

a) a magnetic field intensity controlling device (1), said device (1) being capable of moving along the construction's axis, the said device (1) having at least two blocks of sensors, the said sensors (10) in a block are located on a disk (11) at a set distance from one another, where the said disk (11) is capable of rotating around its axis in horizontal plane, and the number of such disks (11) in a block is not less than two, where the speed of rotation of the disks (11) is synchronized and provides not less than one hundred measurements of magnetic field intensity per time unit, and where each sensor (10) is capable of measuring the magnetic field parameters generated by the ferromagnetic construction in at least two orthogonal directions, and where the said sensors (10) at the time instant of measuring the magnetic field form a spatial structure, and where at least one of the sensor blocks contains at least one extra sensor capable of measuring the Earth magnetic field vector, and

b) a unit of data gathering and initial processing (12), wherein the sensor blocks are connected to a unit of data gathering and initial processing (12), and

c) at least two independent means of measuring the distance travelled by the magnetic field intensity controlling device, connected to the unit of data gathering and initial processing (12), and

d) an external source for generating an electromagnetic field of a set frequency, said frequency being selected depending on the type and size of the inspected construction.

8. A device according to claim 7, wherein the sensors (10) comprise flux gate sensors.

9. A device according to claim 7 or 8, wherein the means for measuring the distance travelled by the magnetic field intensity device comprise a mechanical odometer and a GPS measurement unit.

Fig. 1

Fig. 2

Europäisches
Patentamt

European
Patent Office

Office européen
des brevets

# EUROPEAN SEARCH REPORT

Application Number

EP 20 21 4490

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2018/059060 A1 (DUSSEAULT MAURICE BERNARD [CA] ET AL) 1 March 2018 (2018-03-01) * the whole document * ----- | 1-9 | INV. G01N27/82 |
| Y | JP S59 162448 A (SHIMADZU CORP) 13 September 1984 (1984-09-13) * the whole document * ----- | 1-9 | |

| | | | TECHNICAL FIELDS SEARCHED (IPC) |
|---|---|---|---|
| | | | G01N |

The present search report has been drawn up for all claims

| Place of search | Date of completion of the search | Examiner |
|---|---|---|
| Munich | 3 May 2021 | De Masi, Rita |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 21 4490

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2021

| Patent document cited in search report | Publication date | Patent family member(s) | Publication date |
|---|---|---|---|
| US 2018059060 A1 | 01-03-2018 | CA 2970509 A1<br>US 2018059060 A1 | 01-03-2018<br>01-03-2018 |
| JP S59162448 A | 13-09-1984 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2102652
- RU 2155943
- RU 2661312
- RU 2264617

**Non-patent literature cited in the description**

- **VONSOVSKY S.V.** Magnetic properties of dia-, para-, antiferro-, and ferromagnetics. *Magnetism,* 1971, 1032